# EUROPEAN PATENT APPLICATION

(11) **EP 3 979 044 A1**
(43) Date of publication of application: **06.04.2022**
(21) Application number: 20814953.4
(22) Date of filing: 30.04.2020
(51) Int. Cl.: G06F 3/01

(54) **INFORMATION PROCESSING DEVICE, INFORMATION PROCESSING METHOD, AND PROGRAM**

(30) Priority: 28.05.2019 JP 2019099717
(71) Applicant: Sony Group Corporation, Tokyo 108-0075 (JP)
(72) Inventor: YAMANO, Ikuo, Tokyo 108-0075 (JP)
(74) Representative: MFG Patentanwälte Meyer-Wildhagen Meggle-Freund Gerhard PartG mbB
(86) International application number: PCT/JP2020/018229
(87) International publication number: WO 2020/241170

(57) **Abstract**

It is possible to more appropriately provide haptic stimulation based on a reproduction speed of a content. Provided is an information processing device according to an embodiment including a haptic control unit (113) that generates a signal used for providing haptic stimulation corresponding to a content to a user based on a reproduction speed of the content to be provided to the user.

## Description

### Field

The present disclosure relates to an information processing device, an information processing method, and a program.

### Background

In recent years, various contents and devices capable of providing haptic stimulation such as vibration stimulation to a user have been developed. For example, Patent Literature 1 below discloses an information processing device capable of improving functions, operability, and the like using vibration stimulation.

### Citation List

### Patent Literature

Patent Literature 1: JP 2018-64264 A

### Summary

### Technical Problem

However, with the technology disclosed in Patent Literature 1 and the like, it may not be possible to appropriately provide haptic stimulation based on a reproduction speed of a content. For example, in a case where the reproduction speed of the content is much lower than a standard (in a case where the reproduction speed is lower than a predetermined value. Hereinafter, the reproduction at the lower reproduction speed may be referred to as "super slow reproduction"), when a reproduction speed of the haptic stimulation is simply decreased, a user may feel uncomfortable with the haptic stimulation, and the realistic feeling may be impaired. Meanwhile, in a case where the provision of the haptic stimulation is omitted while the super slow reproduction of the content is performed, the realistic feeling may also be impaired (note that the above problem is merely an example, and the problem according to the present disclosure is not limited thereto).

Therefore, the present disclosure has been made in view of the above circumstances, and provides a novel and improved information processing device, information processing method, and program capable of more appropriately providing haptic stimulation based on a reproduction speed of a content.

### Solution to Problem

For solving the problem described above, an information processing device according to one aspect of the present disclosure has a haptic control unit that generates a signal used for providing haptic stimulation corresponding to a content to a user based on a reproduction speed of the content provided to the user.

An information processing method executed by a computer, the information processing method according to one aspect of the present disclosure comprises, generating a signal used for providing haptic stimulation corresponding to a content to a user based on a reproduction speed of the content provided to the user.

A program according to one aspect of the present disclosure causes a computer to execute generating a signal used for providing haptic stimulation corresponding to a content to a user based on a reproduction speed of the content provided to the user.

An information processing device according to one aspect of the present disclosure has a communication unit that receives a signal generated based on a reproduction speed of a content provided to a user and used for providing haptic stimulation corresponding to the content to the user; and a haptic output unit that outputs the haptic stimulation by using the signal.

### Brief Description of Drawings

FIG. 1 is a block diagram illustrating a configuration example of an information processing system according to the present embodiment.
FIG. 2 is a block diagram illustrating a configuration example of a distribution device according to the present embodiment.
FIG. 3 is a block diagram illustrating a configuration example of a reproduction device according to the present embodiment.
FIG. 4 is a diagram for describing a specific example of processing of changing a reproduction period of a haptic signal based on a change of a reproduction speed of a content.
FIG. 5 is a diagram for describing the specific example of the processing of changing the reproduction period of the haptic signal based on the change of the reproduction speed of the content.
FIG. 6 is a diagram for describing a specific example of a reproduction mode of a haptic signal based on the reproduction speed of the content.
FIG. 7 is a flowchart illustrating a processing flow example of each component according to the present embodiment.
FIG. 8 is a diagram illustrating an example of a frequency characteristic of a vibration actuator.
FIG. 9 is a diagram for describing a specific example of processing of changing a reproduction period of a haptic signal based on a change of a reproduction speed of a content in a modified example.
FIG. 10 is a flowchart illustrating a processing flow example of each component according to the modified example.
FIG. 11 is a diagram for describing a specific example of a video displayed in a case where a reproduction speed is changed by a seek bar.
FIG. 12 is a block diagram illustrating a hardware configuration example of each device according to the present embodiment and the modified example.

### Description of Embodiments

Hereinafter, preferred embodiments of the present disclosure will be described in detail with reference to the accompanying drawings. In the present specification and the drawings, components having substantially the same functional configuration will be denoted by the same reference numerals to omit an overlapping description.

Note that the description will be provided in the following order.
1. Overview
2. Embodiment
2.1. Configuration Example
2.2. Example of Control Performed by Haptic Control Unit
2.3. Processing Flow Example
3. Modified Example
4. Remarks
5. Hardware Configuration Example
6. Conclusion

### <1. Overview>

First, the overview of the present disclosure will be described.

As described above, in recent years, various devices capable of providing haptic stimulation such as vibration stimulation to a user have been developed, and there is a possibility that haptic stimulation will be provided more widely as an element of (media) content together with video and sound.

As for contents, various expressions and corresponding reproduction technologies have already been developed. Specifically, various methods of expressing a content in a case where a reproduction speed of the content is increased or decreased have been developed. For example, there has been developed a technology for making it possible to recognize a motion that is fast enough to be difficult to catch with naked eyes by decreasing a reproduction speed of a video so as to be lower than the standard, and the technology is used, for example, in sports broadcasting and the like. Conversely, a technology for increasing the reproduction speed of the video so as to be much higher than the standard has also been developed and used for searching for a desired scene in a content, and the like.

As for a method of expressing a sound in a case where a reproduction speed of a video is changed, when the reproduction speed is changed so that the sound also corresponds to the reproduction speed of the video, the user hears a lower pitched sound or higher pitched sound than the actual sound. Therefore, a method of omitting the reproduction of the sound or replacing the sound with another sound while the reproduction speed of the video is changed may be adopted. It is a matter of course that various expression methods have been developed and implemented in addition to these expression methods.

Meanwhile, similarly to the sound, various methods of expressing haptic stimulation in a case where a reproduction speed of a video is changed have been developed. However, it may not be possible to appropriately provide haptic stimulation based on a reproduction speed of a content with a technology according to the related art (for example, the technology disclosed in Patent Literature 1 and the like described above). For example, in a case where super slow reproduction of a video is performed, when a reproduction speed of the haptic stimulation is simply decreased, the user may feel uncomfortable with the haptic stimulation, and the realistic feeling may be impaired. Specifically, in a case where vibration stimulation with a frequency of 160 [Hz] is reproduced at 1/8 times speed, the frequency of the vibration stimulation is changed to 20 [Hz], which may cause the user to feel a great sense of discomfort. In addition, when the frequency after the change of the reproduction speed deviates from an outputtable range of a device (for example, a vibration actuator or the like) that outputs the vibration stimulation, the vibration stimulation is not output in some cases. Meanwhile, in a case where the provision of the haptic stimulation is omitted while the super slow reproduction of the video is performed, the realistic feeling may be impaired. These problems similarly apply to a case where the reproduction speed of the content is increased.

Here, a sensory characteristic of a human with respect to haptic stimulation and a sensory characteristic with respect to sound are different from each other. For example, senses of a human are more insensitive to a frequency change of haptic stimulation than to a frequency change of sound. Specifically, it is known that, even in a case where a change rate of the frequency of the sound is 1 [%] or less, a human is highly likely to perceive the change, whereas in a case where a change rate of the frequency of the vibration stimulation (an example of the haptic stimulation) is 30 [%] or less, a human is highly likely not to perceive the change.

The present discloser has created the technology according to the present disclosure in view of the above circumstances. An information processing device according to the present disclosure generates a signal used for providing haptic stimulation corresponding to a content to a user based on a reproduction speed of the content provided to the user. Specifically, the information processing device according to the present disclosure changes the signal based on a change of the reproduction speed of the content. For example, the information processing device according to the present disclosure changes the signal so as to change a reproduction period of the signal based on the change of the reproduction speed of the content.

As a result, the information processing device according to the present disclosure can more appropriately provide the haptic stimulation based on the reproduction speed of the content. More specifically, as described above, since the senses of a human are relatively insensitive to the frequency change of the haptic stimulation, the information processing device according to the present disclosure can provide, to the user, the haptic stimulation that does not make the user feel uncomfortable even in a case where the signal is changed so as to change the reproduction period of the signal used for providing the haptic stimulation to the user. Hereinafter, functions and processing of the information processing device according to the present disclosure will be described in detail.

### <2. Embodiment>

### (2.1. Configuration Example)

The overview of the present disclosure has been described above. Next, various configuration examples according to an embodiment of the present disclosure will be described.

### (Configuration Example of Information Processing System)

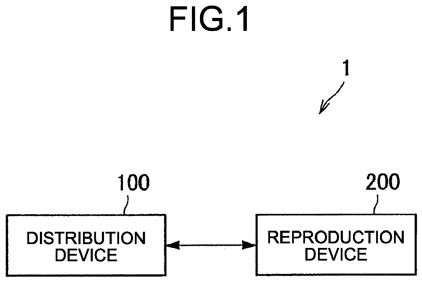

FIG. 1 is a block diagram illustrating a configuration example of an information processing system 1 according to the present embodiment. As illustrated in FIG. 1, the information processing system 1 according to the present embodiment includes a distribution device 100 and a reproduction device 200.

The distribution device 100 is an information processing device that distributes a content to the reproduction device 200. For example, the distribution device 100 distributes a content to the reproduction device 200 based on a request signal (request) received from the reproduction device 200. Note that a distribution manner is not necessarily limited thereto. For example, the distribution device 100 may distribute a content without the request signal from the reproduction device 200.

Here, it is sufficient that the "content" includes at least haptic stimulation, and may include, for example, a video or a sound in addition to the haptic stimulation. In the present embodiment, a case where the content includes a video, a sound, and haptic stimulation will be described as an example. That is, the distribution device 100 generates a signal in a predetermined format used to output a video, a sound, and haptic stimulation, and transmits the signal to the reproduction device 200. Note that a signal generation method and a signal distribution method performed by the distribution device 100 are not particularly limited. Hereinafter, a signal used to output a video is also referred to as a "video signal", a signal used to output a sound is also referred to as a "sound signal", and a signal used to output haptic stimulation is also referred to as a "haptic signal".

In addition, the "haptic stimulation" includes at least one of vibration stimulation, electrical stimulation, stimulation caused by a temperature change, stimulation related to a sense-of-force (for example, stimulation related to a sensation of being pushed by an object, stimulation related to a sensation of being in contact with an object, stimulation related to a sensation of being tightened, or the like), or stimulation related to a cutaneous sensation (for example, stimulation related to a rough sensation, stimulation related to a slippery sensation, or the like), and may be a combination thereof. Note that the haptic stimulation is not necessarily limited thereto, and may be any stimulation that acts on the haptic sense of the user. In the present embodiment, a case where the haptic stimulation is vibration stimulation will be mainly described as an example.

The distribution device 100 does not have to be implemented by one device. For example, in a case where the content is broadcasting of sports such as baseball, the distribution device 100 may be implemented by a video camera that is arranged in a baseball park and performs shooting, a device that edits a video of the video camera, a device that distributes an edited video, and the like, and the number of respective devices is not particularly limited.

Meanwhile, the reproduction device 200 is an information processing device that reproduces the content by using various signals received from the distribution device 100. It is sufficient that the reproduction device 200 is able to provide at least the haptic stimulation, and may be, for example, a smartphone, a tablet personal computer (PC), a head mounted display, or the like. In the present embodiment, a case where the reproduction device 200 is a smartphone will be described as an example. That is, the reproduction device 200 outputs vibration stimulation by causing a vibration actuator or the like to vibrate using the haptic signal received from the distribution device 100, displays a video on a display or the like using the video signal, and outputs a sound from a speaker or the like using the sound signal.

Similarly to the distribution device 100, the reproduction device 200 does not have to be implemented by one device. For example, the reproduction device 200 may be implemented by a device capable of outputting haptic stimulation, a device capable of outputting a video, a device capable of outputting a sound, and the like, and the number of respective devices is not particularly limited.

The reproduction device 200 according to the present embodiment performs processing of changing a reproduction speed of the content and various controls associated therewith. For example, the reproduction device 200 changes the reproduction speed of the content based on an input made by the user (in other words, the reproduction speed of the content is determined based on the input made by the user). Then, the reproduction device 200 changes an output by changing various signals received from the distribution device 100 according to the change of the reproduction speed of the content. Here, the "reproduction speed of the content" is a speed at which the content including a video, a sound, and haptic stimulation is provided to the user, and may refer to any of a speed felt by the user and a processing speed of the reproduction device 200. A range of the reproduction speed of the content is not particularly limited. Specifically, reproduction can be performed in various modes including super slow reproduction at about 0.125 times speed, reproduction at about 0.5 to 0.9 times speed (also referred to as "slow reproduction"), reproduction at about 2.0 to 8.0 times speed (also referred to as "fast forward reproduction"), and the like. Furthermore, a speed of scene change by an operation (for example, movement of a knob on a seek bar, and the like) of a user interface used to control a reproduced scene of the content may be treated as the reproduction speed (details will be described later). Note that the processing of changing the reproduction speed of the content and various controls associated therewith may be implemented by the distribution device 100 or may be implemented by the distribution device 100 and the reproduction device 200 in a distributed manner.

Furthermore, the configuration illustrated in FIG. 1 is merely an example, and the configuration example of the information processing system 1 according to the present embodiment is not necessarily limited to the example of FIG. 1. For example, a device other than the distribution device 100 and the reproduction device 200 may be separately provided.

### (Configuration Example of Distribution Device)

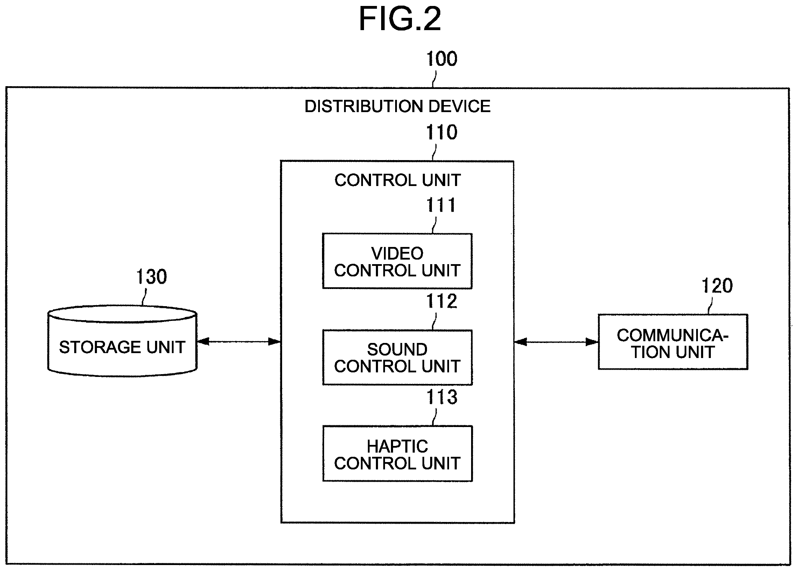

FIG. 2 is a block diagram illustrating a configuration example of the distribution device 100 according to the present embodiment. As illustrated in FIG. 2, the distribution device 100 according to the present embodiment includes a control unit 110, a communication unit 120, and a storage unit 130. Then, the control unit 110 includes a video control unit 111, a sound control unit 112, and a haptic control unit 113.

The control unit 110 is configured to comprehensively control the overall processing performed by the distribution device 100. For example, the control unit 110 controls activation and deactivation of the respective components (for example, the video control unit 111, the sound control unit 112, the haptic control unit 113, and the like) based on the request signal from the reproduction device 200. Note that a control content of the control unit 110 is not particularly limited. For example, the control unit 110 may control processing (for example, processing related to an operating system (OS), and the like) generally performed in various servers, general-purpose computers, PCs, tablet PCs, or the like.

The video control unit 111 is configured to control a content of a video output by the reproduction device 200. Specifically, the video control unit 111 generates the video signal based on the request signal from the reproduction device 200, and transmits the video signal to the reproduction device 200 via the communication unit 120. Note that a content of the video provided by the video control unit 111 is not particularly limited. For example, the video provided by the video control unit 111 may be a video specified by the request signal from the reproduction device 200, or may be a video determined by the position and posture of the reproduction device 200 in a case where the reproduction device 200 is an information processing device whose position and posture are changed such as a head mounted display. Furthermore, the video provided by the video control unit 111 may include a video for the right eye and a video for the left eye. Furthermore, the video signal may be provided as a set of data together with the sound signal and the haptic signal, or may be provided as separate data (in any case, it is desirable that the video, the sound, and the haptic stimulation are provided in synchronization).

The sound control unit 112 is configured to control a content of a sound output by the reproduction device 200. Specifically, the sound control unit 112 generates the sound signal based on the request signal from the reproduction device 200, and transmits the sound signal to the reproduction device 200 via the communication unit 120. Note that a content of the sound provided by the sound control unit 112 is not particularly limited. For example, the sound provided by the sound control unit 112 may be a sound specified by the request signal from the reproduction device 200, or may be a sound determined by the position and posture of the reproduction device 200 in a case where the reproduction device 200 is a head mounted display or the like. Furthermore, the sound provided by the sound control unit 112 may include a sound for the right ear and a sound for the left ear.

The haptic control unit 113 is configured to control a content of haptic stimulation (for example, vibration stimulation or the like) output by the reproduction device 200. Specifically, the haptic control unit 113 generates the haptic signal based on the request signal from the reproduction device 200, and transmits the haptic signal to the reproduction device 200 via the communication unit 120. Note that a content of the haptic stimulation provided by the haptic control unit 113 is not particularly limited. For example, the haptic stimulation provided by the haptic control unit 113 may be haptic stimulation specified by the request signal from the reproduction device 200, or may be haptic stimulation determined by the position and posture of the reproduction device 200 in a case where the reproduction device 200 is a head mounted display or the like.

The communication unit 120 is configured to communicate with the reproduction device 200. For example, the communication unit 120 receives the content request signal from the reproduction device 200, and transmits the video signal, the sound signal, and the haptic signal to the reproduction device 200. Note that information received and transmitted by the communication unit 120 and the case of communication are not limited thereto.

The storage unit 130 is configured to store various types of information. For example, the storage unit 130 stores various signals and the like generated by the control unit 110, and stores programs, parameters, and the like used by each component of the distribution device 100. Note that the information stored in the storage unit 130 is not limited thereto.

Hereinabove, the configuration example of the distribution device 100 has been described. Note that the configuration described above with reference to FIG. 2 is merely an example, and the configuration of the distribution device 100 is not limited to such an example. For example, the distribution device 100 does not have to include all of the components illustrated in FIG. 2, and may include a component not illustrated in FIG. 2. Furthermore, the configuration of the distribution device 100 can be flexibly modified according to specifications and operations.

### (Configuration Example of Reproduction Device)

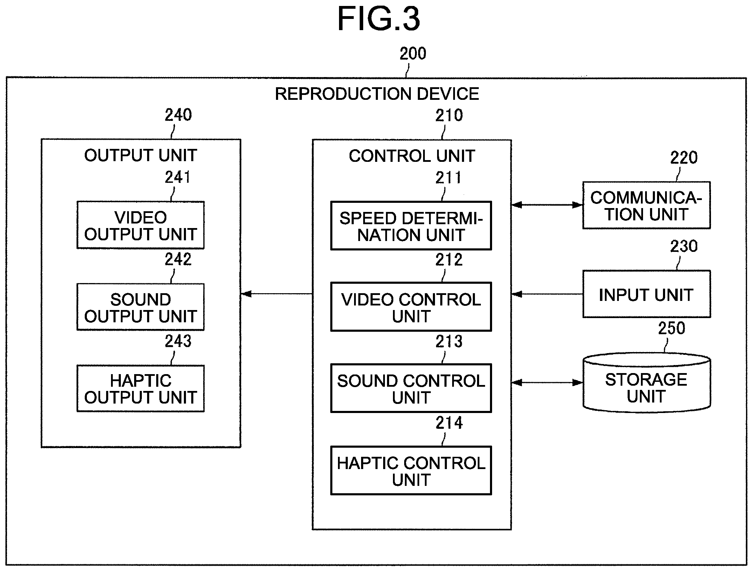

FIG. 3 is a block diagram illustrating a configuration example of the reproduction device 200 according to the present embodiment. As illustrated in FIG. 3, the reproduction device 200 according to the present embodiment includes a control unit 210, a communication unit 220, an input unit 230, an output unit 240, and a storage unit 250. Then, the control unit 210 includes a speed determination unit 211, a video control unit 212, a sound control unit 213, and a haptic control unit 214, and the output unit 240 includes a video output unit 241, a sound output unit 242, and a haptic output unit 243.

The control unit 210 is configured to comprehensively control the overall processing performed by the reproduction device 200. For example, the control unit 210 controls activation and deactivation of the respective components (for example, the speed determination unit 211, the video control unit 212, the sound control unit 213, the haptic control unit 214, and the like) based on various signals from the distribution device 100. Note that a control content of the control unit 210 is not particularly limited. For example, the control unit 210 may control processing (for example, processing related to an OS, and the like) generally performed in various servers, general-purpose computers, PCs, tablet PCs, or the like.

The speed determination unit 211 is configured to determine the reproduction speed of the content. For example, the speed determination unit 211 determines the reproduction speed of the content based on an input made by the user with respect to the input unit 230. As a result, the user can reproduce the content at a desired speed. As described above, the range of the reproduction speed of the content is not particularly limited.

The video control unit 212 is configured to control output of a video. Specifically, the video control unit 212 provides the video signal provided from the distribution device 100 to the video output unit 241, thereby controlling the output of the video performed by the video output unit 241. At that time, the video control unit 212 provides the video signal so that the video is output at the reproduction speed determined by the speed determination unit 211.

The sound control unit 213 is configured to control output of a sound. Specifically, the sound control unit 213 provides the sound signal provided from the distribution device 100 to the sound output unit 242, thereby controlling the output of the sound performed by the sound output unit 242. At that time, the sound control unit 213 provides the sound signal so that the sound is output at the reproduction speed determined by the speed determination unit 211. Here, as described above, senses of a human are more sensitive to a frequency change of sound than to a frequency change of haptic stimulation. Therefore, in a case where a change rate of the reproduction speed is higher than a predetermined value (in a case where the change of the sound is great enough to be perceived), the sound control unit 213 changes the sound signal using speech speed conversion processing and provides the changed sound signal to the sound output unit 242. The "speech speed conversion processing" is processing of changing a reproduction period while maintaining the quality and pitch of the sound. As a result, the sound control unit 213 can output the sound slowly or quickly without making the user feel uncomfortable. Since the sound control unit 213 can use the existing speech speed conversion processing, a detailed description of the speech speed conversion processing will be omitted. Note that the sound control unit 213 does not have to maintain the quality and pitch of the sound before and after the change of the reproduction speed.

The haptic control unit 214 is configured to control output of haptic stimulation. Specifically, the haptic control unit 214 provides the haptic signal provided from the distribution device 100 to the haptic output unit 243, thereby controlling the output of the haptic stimulation performed by the haptic output unit 243. At that time, the haptic control unit 214 provides the haptic signal so that the haptic stimulation is output at the reproduction speed determined by the speed determination unit 211. Furthermore, in the present embodiment, the haptic control unit 214 can change the haptic signal based on the reproduction speed of the content (note that changing the haptic signal is equivalent to generating the haptic signal). Details will be described later.

The communication unit 220 is configured to communicate with the distribution device 100. For example, the communication unit 220 transmits the content request signal to the distribution device 100, and receives the video signal, the sound signal, and the haptic signal from the distribution device 100. Note that information received and transmitted by the communication unit 220 and the case of communication are not limited thereto.

The input unit 230 is configured to receive an input made by the user. For example, the input unit 230 includes input devices such as a mouse, a keyboard, a touch panel, a button, a switch, and a microphone, and the user can perform an input operation for requesting the content, changing the reproduction speed of the content, or the like by using these input devices. Note that the input device included in the input unit 230 is not limited thereto.

The output unit 240 is configured to perform various outputs under the control of the control unit 210. Specifically, the video output unit 241 is a video output device such as a display capable of outputting a video, the sound output unit 242 is a sound output device such as a speaker capable of outputting a sound, and the haptic output unit 243 is a haptic output device such as a vibration actuator capable of outputting vibration stimulation. These components perform various outputs by using signals (the video signal, the sound signal, and the haptic signal) provided from the control unit 210. Note that the output device included in each component of the output unit 240 is not limited to the above. For example, although the haptic stimulation is not necessarily limited to vibration stimulation, it goes without saying that the type of the haptic output unit 243 varies according to haptic stimulation to be provided.

The storage unit 250 is configured to store various types of information. For example, the storage unit 250 stores various signals and the like processed by the control unit 210, and stores programs, parameters, and the like used by each component of the reproduction device 200. Note that the information stored in the storage unit 250 is not limited thereto.

Hereinabove, the configuration example of the reproduction device 200 has been described. Note that the configuration described above with reference to FIG. 3 is merely an example, and the configuration of the reproduction device 200 is not limited to such an example. For example, the reproduction device 200 does not have to include all of the components illustrated in FIG. 3, and may include a component not illustrated in FIG. 3. Furthermore, the configuration of the reproduction device 200 can be flexibly modified according to specifications and operations. Furthermore, in a case where various controls associated with the change of the reproduction speed of the content are implemented by the distribution device 100 instead of the reproduction device 200, the communication unit 220 of the reproduction device 200 receives the haptic signal generated by the distribution device 100 based on the reproduction speed, and the haptic output unit 243 outputs the haptic stimulation by using the haptic signal.

### (2.2. Example of Control Performed by Haptic Control Unit)

Hereinabove, various configuration examples according to the present embodiment have been described. Next, an example of a control performed by the haptic control unit 214 of the reproduction device 200 will be described.

As described above, the haptic control unit 214 changes the haptic signal (the signal used to provide the haptic stimulation to the user) based on the reproduction speed of the content (note that changing the haptic signal is equivalent to generating the haptic signal). Specifically, the haptic control unit 214 changes the haptic signal provided from the distribution device 100 based on the change of the reproduction speed of the content. For example, the haptic control unit 214 changes the haptic signal so as to change the reproduction period of the haptic signal based on the change of the reproduction speed of the content.

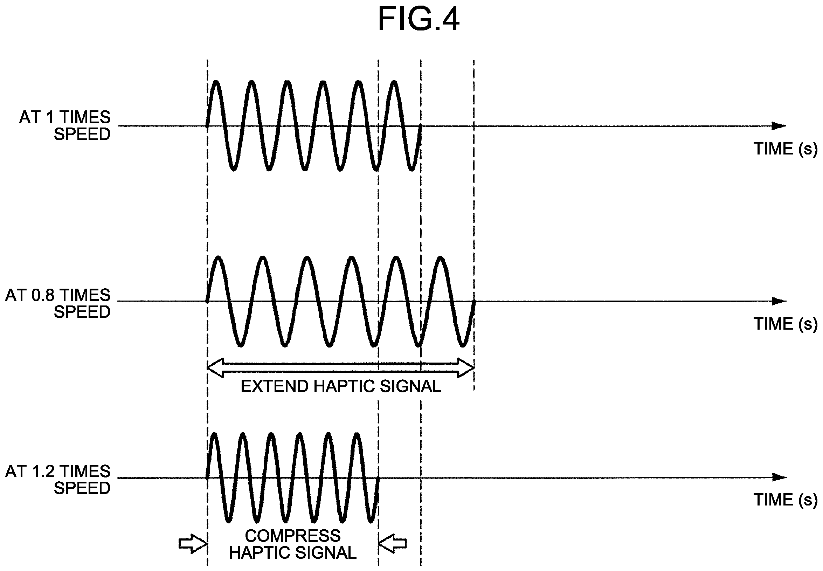

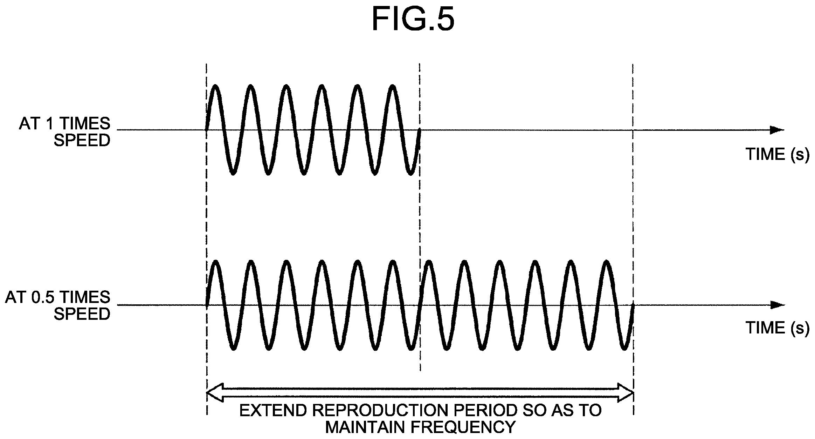

Here, a specific example of processing of changing the reproduction period of the haptic signal based on the change of the reproduction speed of the content will be described with reference to FIGS. 4 and 5. FIG. 4 illustrates haptic signals in a case where the content is reproduced at 1.0 times speed, a case where the content is reproduced at 0.8 times speed, and a case where the content is reproduced at 1.2 times speed. As illustrated in FIG. 4, the haptic control unit 214 may extend or compress the haptic signal so as to change the frequency of the haptic signal based on the change of the reproduction speed, thereby extending or shortening the reproduction period of the haptic signal. Specifically, in a case where the reproduction speed is 0.8 times speed, the haptic control unit 214 may extend the reproduction period of the haptic signal by extending the haptic signal so that the frequency of the haptic signal is lower than that in a case where the reproduction speed is 1.0 times speed. Furthermore, in a case where the reproduction speed is 1.2 times speed, the haptic control unit 214 may shorten the reproduction period of the haptic signal by compressing the haptic signal so that the frequency of the haptic signal is higher than that in a case where the reproduction speed is 1.0 times speed.

As described above, since the senses of a human are relatively insensitive to the frequency change of the haptic stimulation, the haptic control unit 214 can provide, to the user, haptic stimulation that does not make the user feel uncomfortable even in a case where the haptic signal is extended or compressed so as to change the frequency of the haptic signal based on the change of the reproduction speed. In addition, the processing of extending or compressing the haptic signal so as to change the frequency of the haptic signal can be implemented with a lower load than that in processing of changing the haptic signal so as to maintain the frequency of the haptic signal described below.

Furthermore, in a case where the change rate of the reproduction speed of the content is higher than the predetermined value (for example, about 30 [%]), when the frequency of the haptic signal is changed as illustrated in FIG. 4, it is highly likely that a human perceives the change of the haptic stimulation. FIG. 5 illustrates haptic signals in a case where the content is reproduced at 1 times speed and a case where the content is reproduced at 0.5 times speed, and the haptic control unit 214 may extend or shorten the reproduction period of the haptic signal by changing the haptic signal so as to maintain the frequency of the haptic signal based on the change of the reproduction speed of the content as illustrated in FIG. 5. Specifically, in a case where the change rate of the reproduction speed of the content is higher than the predetermined value (for example, about 30 [%]), the haptic control unit 214 may extend or shorten the reproduction period of the haptic signal by changing the haptic signal so as to maintain the frequency of the haptic signal based on the change rate. For example, the haptic control unit 214 can change the haptic signal so as to maintain the frequency of the haptic signal by performing processing similar to the speech speed conversion processing performed by the sound control unit 213. Note that the speech speed conversion processing is not necessarily used. As a result, even in a case where the change rate of the reproduction speed of the content is high to an extent that the change of the haptic stimulation is perceived, the haptic control unit 214 can provide, to the user, haptic stimulation that does not make the user feel uncomfortable. Furthermore, since the frequency of the haptic signal is maintained in some processing, the haptic control unit 214 can provide haptic stimulation with higher accuracy (as intended by a creator).

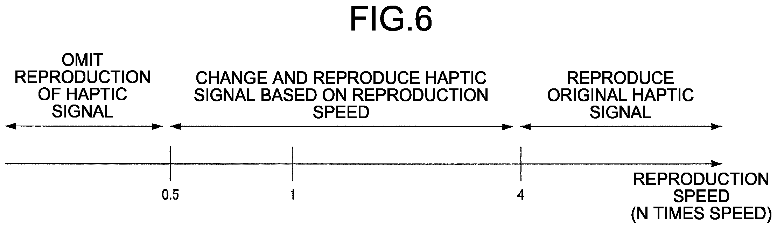

Furthermore, the haptic control unit 214 may omit the reproduction of the haptic signal based on the reproduction speed of the content, or may reproduce the haptic signal without changing the haptic signal. FIG. 6 illustrates a specific example of a reproduction mode of the haptic signal based on the reproduction speed of the content. For example, in a case where the reproduction speed of the content is within a predetermined range (for example, within a range of 0.5 times speed to 4.0 times speed), the reproduction period of the haptic signal is changed as described above. Meanwhile, in a case where the reproduction speed of the content is lower than a predetermined value (for example, 0.5 times speed), when the reproduction period of the haptic signal is extended as described above, the user may feel uncomfortable (or discomfort) due to the excessively long reproduction period. Therefore, in a case where the reproduction speed of the content is lower than the predetermined value (for example, 0.5 times speed), the haptic control unit 214 may omit the reproduction of the haptic signal as illustrated in FIG. 6. Note that, although not illustrated in FIG. 6, the reproduction of the haptic signal may be similarly omitted also in a case where the reproduction speed of the content is higher than a predetermined value.

Furthermore, for example, in a case where the reproduction speed of the content is higher than a predetermined value (for example, 4.0 times speed), when the reproduction period of the haptic signal is shortened as described above, there is a possibility that the user cannot appropriately perceive the vibration stimulation because the reproduction period is excessively short. Therefore, in a case where the reproduction speed of the content is higher than the predetermined value (for example, 4.0 times speed), as illustrated in FIG. 6, the haptic control unit 214 may reproduce the original haptic signal. Note that, although not illustrated in FIG. 6, the reproduction may be similarly performed without changing the haptic signal also in a case where the reproduction speed of the content is lower than a predetermined value.

Note that the reproduction mode of the haptic signal based on the reproduction speed of the content is not necessarily limited to the example of FIG. 6. For example, in a case where there is a possibility that the user feels uncomfortable (or discomfort) due to an excessively long reproduction period or an excessively high reproduction frequency of the haptic signal, the haptic control unit 214 may thin out the haptic signal as appropriate. When the thinning processing is performed, a portion of the haptic signal to be reproduced may be limited to a characteristic portion. As a method of extracting the characteristic portion, for example, a portion where the volume of the signal exceeds a certain value, a portion where the signal intensity per unit time exceeds a certain value, and the like can be extracted. Alternatively, the extraction may be performed by limiting the number of portions to be reproduced per unit time according to the reproduction speed, like one portion for a scene of 8 seconds in a case where the reproduction speed is 4 times speed, and one portion for a scene of 16 seconds in a case where the reproduction speed is 8 times speed.

Even in a case where the thinning processing is performed, when the length of one portion of the haptic signal is long, reproduction of a plurality of signals may overlap depending on the reproduction speed. In such a case, it is conceivable that the reproduction period of one portion of the haptic signal is set to a certain value or less, and reproduction of the later part is not performed, or the reproduction of an overlapping later portion of the haptic signal is omitted. In addition, as a haptic sensation characteristic of a human, it is known that when a time interval between two haptic (vibration) stimulations is equal to or less than a certain value (it is said that the time interval is, for example, about 10 [ms] when the vibration stimulation is strong, and the time interval is, for example, about 50 [ms] when the vibration stimulation is weak), two stimulations are connected and felt as one. Therefore, in consideration of this numerical value, in a case where the time interval (the end of the first haptic signal and the start of the second haptic signal) between two haptic signals is equal to or less than a certain range, similarly, processing of not reproducing the second signal, or processing of shortening the first signal and then reproducing the second signal after the certain time interval becomes effective.

Furthermore, as the reproduction mode of the haptic signal based on the reproduction speed of the content, it is also conceivable to perform processing of reproducing the haptic signal in a case where the sound is reproduced in accordance with the reproduction of the video (in a case where the reproduction speed is close to 1.0 times speed), and processing of not reproducing the haptic signal in a case where the sound is not reproduced. Conversely, it is also conceivable to reproduce the haptic signal for the purpose of, for example, assisting in understanding of a scene change of the content even in a case where the sound is not reproduced. In general, an algorithm that automatically generates the haptic signal based on a sound output from a terminal is known and commercially used. However, in the present embodiment, the processing can be characterized in that the algorithm is also operated for the reproduction of the haptic signal even when the sound signal is not reproduced.

### (2.3. Processing Flow Example)

Hereinabove, an example of the control performed by the haptic control unit 214 of the reproduction device 200 has been described. Next, a processing flow example of each component according to the present embodiment will be described.

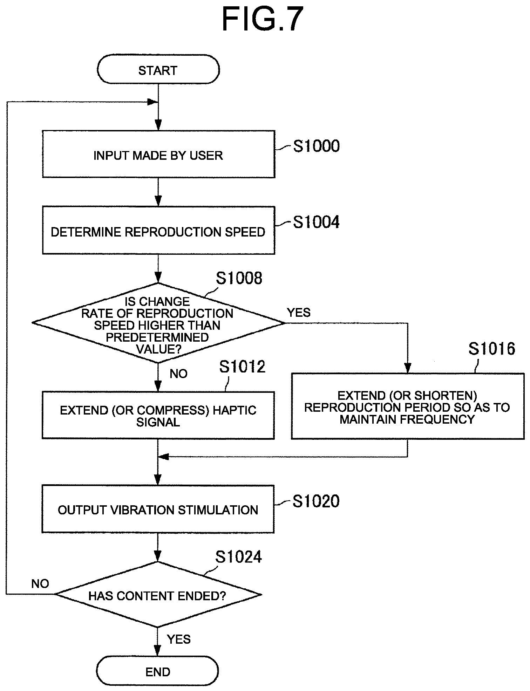

FIG. 7 is a flowchart illustrating the processing flow example of each component according to the present embodiment. In Step S1000, the user makes an input via the input unit 230 of the reproduction device 200, for example. In Step S1004, the speed determination unit 211 determines the reproduction speed of the content based on the input. Note that, in a case where there is no input made by the user, Steps S1000 and S1004 are omitted.

In a case where the change rate of the reproduction speed of the content is not high than the predetermined value (for example, about 30 [%]) (Step S1008/No), there is a high possibility that the change of the haptic stimulation according to the frequency change is not perceived. Therefore, in Step S1012, the haptic control unit 214 extends (or compresses) the haptic signal so as to change the frequency of the haptic signal based on the change rate of the reproduction speed, thereby extending (or shortening) the reproduction period of the haptic signal. Note that, as illustrated in FIG. 4, the haptic signal is extended when the reproduction speed is decreased, and the haptic signal is compressed when the reproduction speed is increased.

In a case where the change rate of the reproduction speed of the content is higher than the predetermined value (for example, about 30 [%]) (Step S1008/Yes), there is a high possibility that the change of the haptic stimulation according to the frequency change is perceived. Therefore, in Step S1016, the haptic control unit 214 changes the haptic signal so as to maintain the frequency of the haptic signal based on the change rate of the reproduction speed, thereby extending (or shortening) the reproduction period of the haptic signal.

In Step S1020, the haptic output unit 243 outputs vibration stimulation by using the haptic signal provided from the haptic control unit 214. When the content ends (Step S1024/Yes), a series of processing ends. When the content continues (Step S1024/No), the processing of Steps S1000 to S1020 is continuously performed.

The processing of the flowchart illustrated in FIG. 7 is repeated for each predetermined unit (for example, for each frame). As a result, the information processing system 1 according to the present embodiment can more appropriately provide the vibration stimulation based on the reproduction speed of the content. Specifically, in a case where the change rate of the reproduction speed is low to an extent that the change of the haptic stimulation according to the frequency change is not perceived, the information processing system 1 can provide, to the user, vibration stimulation that does not make the user feel uncomfortable while reducing the processing load by extending or compressing the haptic signal so as to change the frequency. Furthermore, even in a case where the change rate of the reproduction speed is high to an extent that the change of the haptic stimulation according to the frequency change is perceived, the information processing system 1 extends or shortens the reproduction period of the haptic signal so as to maintain the frequency, such that it is possible to provide, to the user, vibration stimulation with higher accuracy (as intended by the creator), which does not make the user feel uncomfortable.

Note that the respective steps in the flowchart described in FIG. 7 do not necessarily need to be performed in time series in the described order. That is, the respective steps in the flowchart may be performed in an order different from the described order or may be performed in parallel (the same applies to a flowchart of the later stage).

### <3. Modified Example>

Hereinabove, one embodiment of the present disclosure has been described. Next, a modified example of the present disclosure will be described.

An outputtable range may be limited by the characteristic of the haptic output unit 243 that outputs haptic stimulation. For example, in a case of the vibration actuator that outputs vibration stimulation, an outputtable frequency band is narrower than that of a speaker that outputs a sound and the like, and is about 80 to 500 [Hz] in a voice coil motor (VCM) and about 100 ± 5 [Hz] in a linear resonant actuator (LRA). In addition, an output intensity may be changed depending on the frequency change. For example, in a case of the vibration actuator, an acceleration output for the same voltage input may be changed depending on the frequency change.

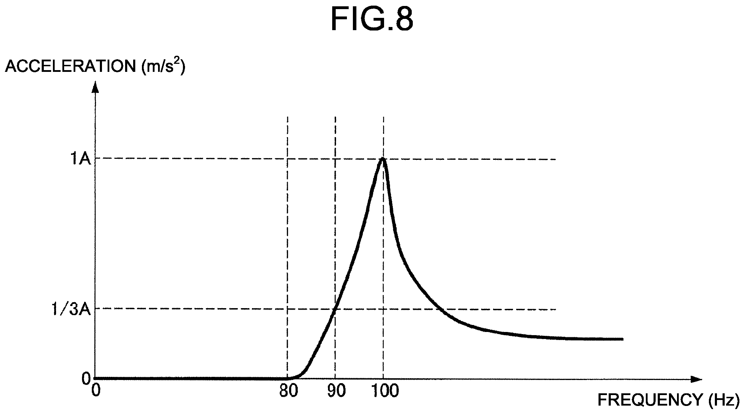

A detailed description will be provided with reference to FIG. 8. FIG. 8 is a diagram illustrating an example of a frequency characteristic of the vibration actuator. In the example illustrated in FIG. 8, the acceleration has a maximum value (1A [m/s²]) when the frequency is 100 [Hz], and the acceleration is decreased to 1/3 (1/3 × A [m/s²]) of the maximum value when the frequency is 90 [Hz]. Then, when the frequency is 80 [Hz] or less, the acceleration is 0 [m/s²]. As described above, the outputtable frequency band of the haptic output unit 243 is limited by its characteristic, and the acceleration output for the same voltage input is also changed according to the frequency change. Therefore, as illustrated in FIG. 4, in a case where the haptic signal is extended or compressed so as to change the frequency of the haptic signal based on the change of the reproduction speed, the acceleration output for the same voltage input may also be changed according to the frequency change, or the vibration stimulation is not output in some cases.

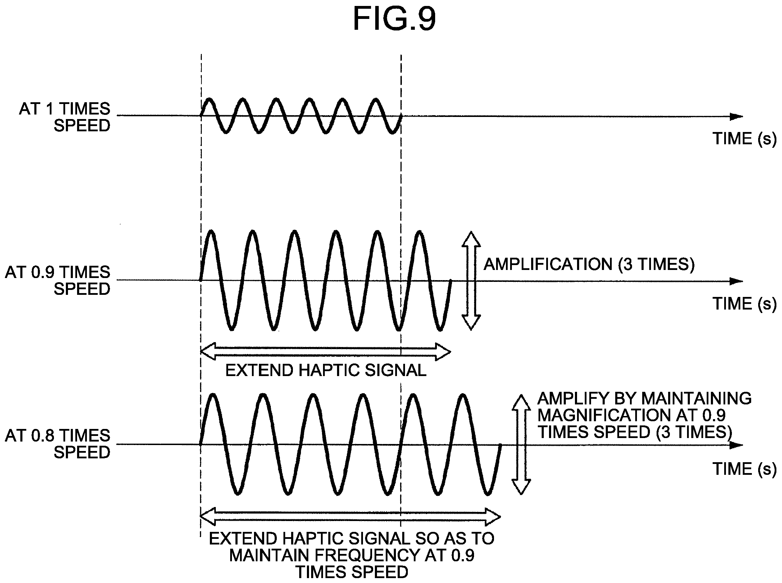

Therefore, the haptic control unit 214 of the reproduction device 200 according to the modified example may change the haptic signal based on the characteristic of the haptic output unit 243 (that outputs the haptic stimulation). A specific example of processing of changing the reproduction period of the haptic signal based on the change of the reproduction speed of the content in the modified example will be described with reference to FIG. 9. FIG. 9 illustrates haptic signals in a case where the content is reproduced at 1.0 times speed, a case where the content is reproduced at 0.9 times speed, and a case where the content is reproduced at 0.8 times speed.

In a case where the content is reproduced at 0.9 times speed, when the haptic signal is extended by the method illustrated in FIG. 4, the frequency of the haptic signal, which is 100 [Hz] at 1.0 times speed, becomes 90 [Hz] (100 × 0.9 = 90 [Hz]), and thus, the output acceleration is decreased from 1A [m/s²] to 1/3 × A [m/s²] in a case of the vibration actuator having the frequency characteristic illustrated in FIG. 8. As a result, the output intensity of the vibration stimulation becomes weaker than that intended by the creator. Therefore, as illustrated in FIG. 9, the haptic control unit 214 changes the amplitude of the haptic signal so as to maintain the output intensity of the haptic stimulation before and after the change of the reproduction speed (changes the amplitude of the haptic signal by three times) while extending the haptic signal. As a result, the haptic control unit 214 can maintain the intensity of the haptic stimulation felt by the user before and after the change of the reproduction speed.

Furthermore, in a case where the content is reproduced at 0.8 times speed, when the haptic signal is extended by the method illustrated in FIG. 4, the frequency of the haptic signal, which is 100 [Hz] at 1.0 times speed, becomes 80 [Hz] (100 × 0.8 = 80 [Hz]). Therefore, the output acceleration is decreased from 1A [m/s²] to 0 [m/s²] in a case of the vibration actuator having the frequency characteristic illustrated in FIG. 8. As a result, the vibration stimulation is not provided. Therefore, in a case where the output intensity of the haptic stimulation after the change of the reproduction speed is weaker than the predetermined value (for example, in a case where the output intensity is too weak to cope with by amplification of the amplitude of the haptic signal), the haptic control unit 214 may limit the change rate of the frequency before and after the change of the reproduction speed. Specifically, as illustrated in FIG. 9, the haptic control unit 214 limits the change rate of the frequency before and after the change of the reproduction speed to 0.9 (that is, the lower limit of the frequency is set to 90 [Hz] which is the frequency at 0.9 times speed), and extends the haptic signal so as to maintain 90 [Hz] when the reproduction speed is changed so that the frequency is 90 [Hz] or less. For example, the haptic control unit 214 can extend the haptic signal so as to maintain the frequency of the haptic signal at 90 [Hz] by performing processing similar to the speech speed conversion processing performed by the sound control unit 213 (the speech speed conversion processing is not necessarily used). At this time, the haptic control unit 214 changes the amplitude of the haptic signal by three times, similarly to a case of 0.9 times speed. As a result, the haptic control unit 214 can appropriately output the haptic stimulation even in a case where the change rate of the reproduction speed is high enough to be deviated from the outputtable range of the haptic output unit 243.

Note that, as for a perception characteristic of the user for the haptic stimulation, in a case where the lower the frequency of the haptic stimulation, the more strongly the user feels the haptic stimulation (in a case where the frequency of the haptic stimulation and the perception intensity have a non-linear relationship), the haptic control unit 214 may change the haptic signal also based on the perception characteristic of the user. As a result, the haptic control unit 214 can maintain the perception intensity of the user for the haptic stimulation before and after the change of the reproduction speed with higher accuracy.

Furthermore, in the above description, the mode in which the haptic stimulation is provided in the modified example has been described. A mode in which the video and the sound are provided in the modified example can be similar to the mode described in the above embodiment. For example, the sound control unit 213 may change the reproduction period while maintaining the quality and pitch of the sound by the speech speed conversion processing before and after the change of the reproduction speed, or does not have to maintain the quality and pitch of the sound.

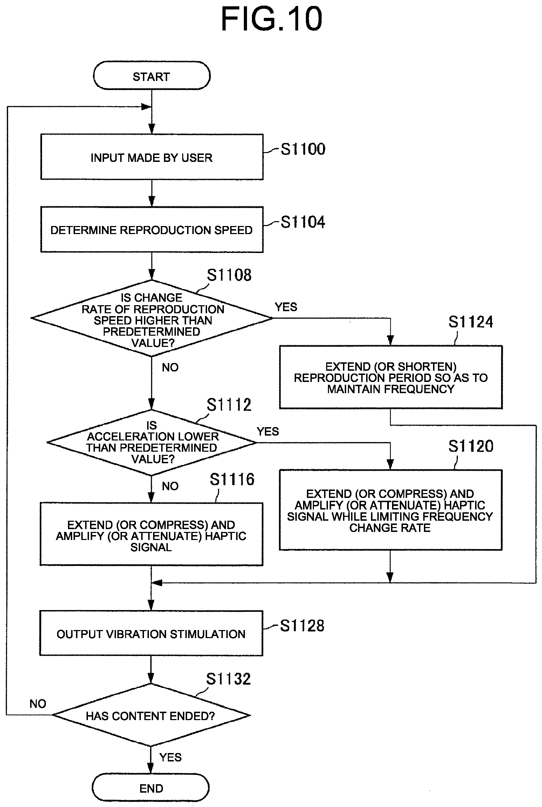

FIG. 10 is a flowchart illustrating a processing flow example of each component according to the modified example. In Step S1100, the user makes an input via the input unit 230 of the reproduction device 200, for example. In Step S1104, the speed determination unit 211 determines the reproduction speed of the content based on the input. Note that, in a case where there is no input made by the user, Steps S1100 and S1104 are omitted.

In a case where the change rate of the reproduction speed of the content is not higher than the predetermined value (for example, about 30 [%]) (Step S1108/No), and the acceleration is not lower than the predetermined value (that is, a case where the output intensity of the haptic stimulation is not weaker than the predetermined value, Step S1112/No), in Step S1116, the haptic control unit 214 extends (or compresses) the haptic signal so as to change the frequency of the haptic signal based on the change rate of the reproduction speed, and amplifies (or attenuates) the amplitude of the haptic signal based on the frequency characteristic of the haptic output unit 243. That is, the haptic control unit 214 performs the processing in a case of 0.9 times speed in FIG. 9.

In Step S1112, in a case where the acceleration is lower than the predetermined value (that is, in a case where the output intensity of the haptic stimulation is weaker than the predetermined value, Step S1112/Yes), in Step S1120, the haptic control unit 214 extends (or compresses) the haptic signal while limiting the change rate of the frequency based on the change rate of the reproduction speed and the frequency characteristic of the haptic output unit 243, and amplifies (or attenuates) the amplitude of the haptic signal. That is, the haptic control unit 214 performs the processing in a case of 0.8 times speed in FIG. 9.

In Step S1108, in a case where the change rate of the reproduction speed of the content is higher than the predetermined value (for example, about 30 [%]) (Step S1108/Yes), there is a high possibility that the change of the haptic stimulation according to the frequency change is perceived. Therefore, in Step S1124, the haptic control unit 214 changes the haptic signal so as to maintain the frequency of the haptic signal based on the change rate of the reproduction speed, thereby extending (or shortening) the reproduction period of the haptic signal.

In Step S1128, the haptic output unit 243 outputs vibration stimulation by using the haptic signal provided from the haptic control unit 214. When the content ends (Step S1132/Yes), a series of processing ends. When the content continues (Step S1132/No), the processing of Steps S1100 to S1128 is continuously performed.

The processing of the flowchart illustrated in FIG. 10 is repeated for each predetermined unit (for example, for each frame). As a result, the information processing system 1 according to the modified example can more appropriately provide vibration stimulation based on the characteristic of the haptic output unit 243. Note that the technical matters described in the above embodiment can also be applied to modified example.

### <4. Remarks>

As described above, the speed of scene change by the operation (for example, movement of a knob on a seek bar, and the like) of the user interface used to control the reproduced scene of the content may be treated as the reproduction speed. Therefore, hereinafter, as an example, a specific example in a case where the reproduction speed is changed by the movement of the knob on the seek bar will be described.

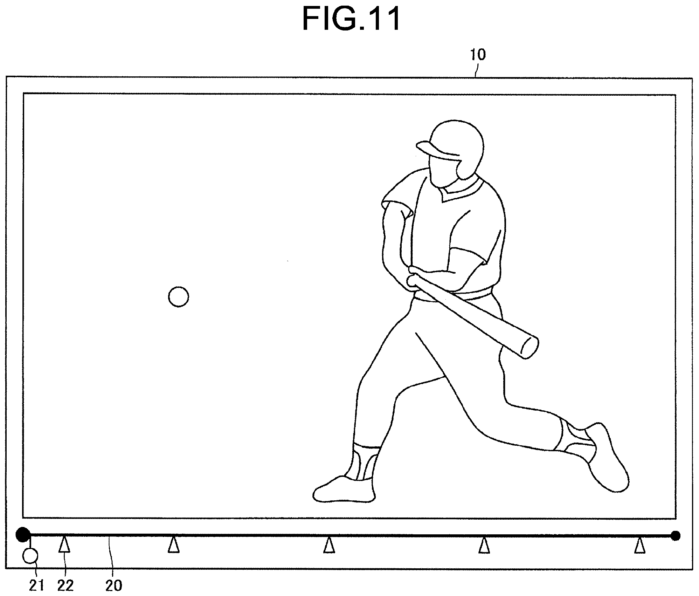

FIG. 11 is a diagram for describing a specific example of a video 10 displayed in a case where the reproduction speed is changed by the movement of the knob on the seek bar. The video 10 of FIG. 11 shows a scene where a baseball player swings a bat to hit a ball. Then, a seek bar 20 used to control a reproduced scene, a knob 21, and a marker 22 indicating a scene where haptic stimulation is provided are displayed on the lower side of the video 10.

The user can change the reproduced scene by moving the position of the knob 21 on the seek bar 20 using the input unit 230 of the reproduction device 200. Further, the haptic stimulation is then provided when the position of the knob 21 reaches the marker 22. In this manner, by displaying the marker 22 indicating the scene where the haptic stimulation is provided, the user can use the marker 22 also as a guide when searching for a desired scene.

Then, the haptic control unit 214 of the reproduction device 200 handles, for example, the moving speed of the knob 21 on the seek bar 20 (scene change speed) as the reproduction speed (not necessarily limited to the moving speed of the knob 21). That is, the haptic control unit 214 changes the haptic signal so as to change the reproduction period of the haptic signal based on the change of the moving speed of the knob 21. At that time, the haptic control unit 214 may change the haptic signal so as to change the frequency of the haptic signal, or may change the haptic signal so as to maintain the frequency of the haptic signal. Furthermore, as in the modified example, the haptic control unit 214 may change the haptic signal based on the characteristic of the haptic output unit 243. Alternatively, regardless of the moving speed of the knob, the haptic signal of the original content may be reproduced while maintaining the frequency and the reproduction period. In this case, the haptic signal is reproduced at a timing at which the knob reaches the marker. The haptic signal for which the marker is provided and which is reproduced when the knob moves may be limited to a characteristic portion among the haptic signals provided to the entire content. As a method of extracting the characteristic portion, for example, a portion where the volume of the signal exceeds a certain value, a portion where the signal intensity per unit time exceeds a certain value, and the like can be extracted. Alternatively, the extraction may be performed by limiting the number of portions to be reproduced per unit time, like "one portion for a scene of 5 seconds", according to the moving speed of the knob.

In addition, although the position of the marker 22 is illustrated in FIG. 11, a method in which the marker is not displayed at a portion extracted as the characteristic portion may be adopted. In either case, by reproducing the haptic signal in accordance with the seek bar operation, the haptic stimulation is presented to the user's finger at a timing at which the knob 21 passes through a specific portion (for example, a scene where a ball hits the bat) in accordance with the operation (for example, movement toward the left) of the knob 21 performed by the user, such that the effect of making it easier for the user to search for the scene and understand the scene change can be obtained. At this time, for example, considering a case where a haptic signal of one second is given to each of two scenes having a time interval of 5 seconds, in a case where the moving speed of the finger is high and the finger passes through the two scenes within one second, the reproduction of the second haptic signal starts before the reproduction of the first haptic signal ends, and thus, there is a possibility that the two haptic signals are mixed. In such a case, the reproduction of the later haptic signal may be omitted. In addition, as a haptic sensation characteristic of a human, it is known that when a time interval between two haptic (vibration) stimulations is equal to or less than a certain value (it is said that the time interval is, for example, about 10 [ms] when the vibration stimulation is strong, and the time interval is, for example, about 50 [ms] when the vibration stimulation is weak), two stimulations are connected and felt as one. Therefore, in consideration of this numerical value, in a situation where the haptic signal is reproduced in accordance with the seek bar operation, in a case where the time interval (the end of the first haptic signal and the start of the second haptic signal) between two haptic signals is equal to or less than a certain range, processing of not reproducing the second signal, or processing of shortening the first signal and then reproducing the second signal after the certain time interval becomes effective.

Note that examples of a method of operating the seek bar may include a touch operation on a touch panel UI, a remote control operation in viewing on a TV screen, a mouse operation in viewing on a PC screen, a touch pad operation, and the like. Also in a case of the seek bar operation, similarly to the above description, it is also conceivable to perform processing of reproducing the haptic signal in a case where the sound is reproduced in accordance with the reproduction of the video (in a case where the moving speed of the seek bar is close to 1.0 times speed), and processing of not reproducing the haptic signal in a case where the sound is not reproduced. Conversely, it is also conceivable to reproduce the haptic signal for the purpose of, for example, assisting in understanding of a scene change of the content described above even in a case where the sound is not reproduced. In general, an algorithm that automatically generates the haptic signal based on a sound output from a terminal is known and commercially used. However, in the present embodiment, the processing can be characterized in that the algorithm is also operated for the reproduction of the haptic signal even when the sound signal is not reproduced. Note that the user interface used to control the reproduced scene of the content is not necessarily limited to the seek bar 20.

### <5. Hardware Configuration Example>

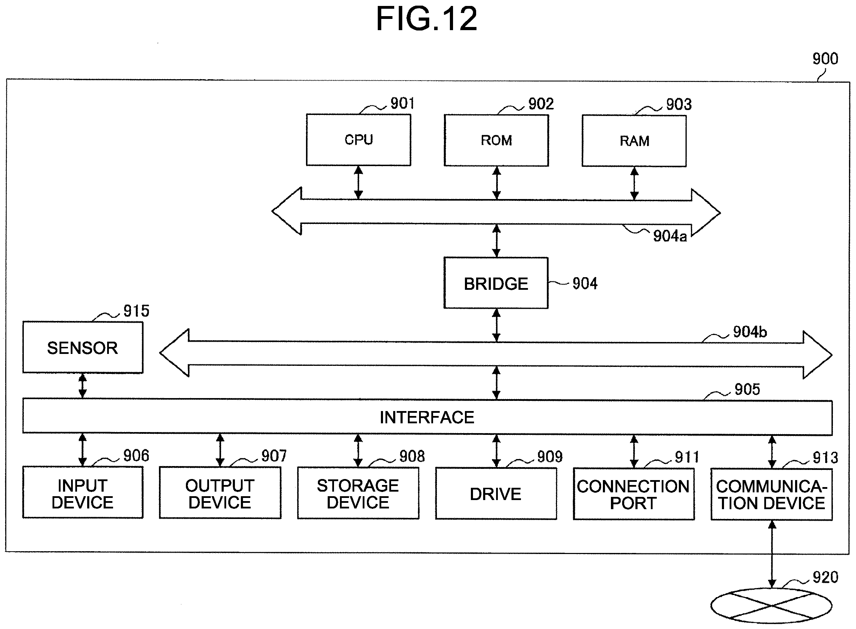

Next, a hardware configuration example according to the present embodiment and the modified example will be described with reference to FIG. 12. FIG. 12 is a block diagram illustrating a hardware configuration example of an information processing device 900 that implements the reproduction device 200 (or the distribution device 100) according to the present embodiment and the modified example. Information processing performed by the reproduction device 200 (or the distribution device 100) according to the present embodiment and the modified example is implemented by cooperation of software and hardware described below.

As illustrated in FIG. 12, the information processing device 900 includes a central processing unit (CPU) 901, a read only memory (ROM) 902, a random access memory (RAM) 903, and a host bus 904a. Furthermore, the information processing device 900 includes a bridge 904, an external bus 904b, an interface 905, an input device 906, an output device 907, a storage device 908, a drive 909, a connection port 911, and a communication device 913. The information processing device 900 may include a processing circuit such as a DSP or an ASIC instead of or in addition to the CPU 901.

The CPU 901 functions as an operation processing device and a control device, and controls an overall operation in the information processing device 900 according to various programs. Furthermore, the CPU 901 may be a microprocessor. The ROM 902 stores a program, a calculation parameter, and the like used by the CPU 901. The RAM 903 temporarily stores a program used in the execution of the CPU 901, a parameter that appropriately changes in the execution, and the like. The CPU 901 can implement the control unit 210 of the reproduction device 200 (or the control unit 110 of the distribution device 100).

The CPU 901, the ROM 902, and the RAM 903 are mutually connected by the host bus 904a including a CPU bus and the like. The host bus 904a is connected to the external bus 904b such as a peripheral component interconnect/interface (PCI) bus via the bridge 904. Note that the host bus 904a, the bridge 904, and the external bus 904b do not need to be separate components, and these functions may be implemented by one bus.

The input device 906 is implemented by, for example, a device to which information is input by a user, such as a mouse, a keyboard, a touch panel, a button, a microphone, a switch, or a lever. Further, the input device 906 may be, for example, a remote control device using infrared rays or other radio waves, or may be an external connection device such as a mobile phone or PDA that supports the operation of the information processing device 900. In addition, the input device 906 may include, for example, an input control circuit that generates an input signal based on information input by the user using the above-described input means and outputs the input signal to the CPU 901. By operating the input device 906, the user can input various data to the information processing device 900 and instruct a processing operation. The input device 906 can implement the input unit 230 of the reproduction device 200.

The output device 907 is configured by using a device capable of visually, audibly, or tactually notifying the user of acquired information. Examples of such a device include a video output device such as a CRT display device, a liquid crystal display device, a plasma display device, or an EL display device, a sound output device such as a speaker or a headphone, a haptic output device such as a vibration actuator, and the like. The output device 907 outputs, for example, a result obtained by various processing performed by the information processing device 900. The output device 907 can implement the output unit 240 of the reproduction device 200.

The storage device 908 is a data storage device configured as an example of the storage unit that can be included in the information processing device 900. The storage device 908 is implemented by, for example, a magnetic storage device such as a hard disk drive (HDD), a semiconductor storage device, an optical storage device, or a magneto-optical storage device. Examples of the storage device 908 may include a storage medium, a recording device that records data in a storage medium, a reading device that reads data from a storage medium, a deletion device that deletes data recorded in a storage medium, and the like. The storage device 908 stores a program executed by the CPU 901, various data, various data acquired from the outside, and the like. The storage device 908 can implement the storage unit 250 of the reproduction device 200 (or the storage unit 130 of the distribution device 100).

The drive 909 is a reader/writer for a storage medium, and is built in or externally attached to the information processing device 900. The drive 909 reads information recorded in a removable storage medium such as a mounted magnetic disk, optical disk, magneto-optical disk, or semiconductor memory, and outputs the information to the RAM 903. Furthermore, the drive 909 can also write information to a removable storage medium.

The connection port 911 is an interface connected to an external device, and is a connection port for connection to an external device capable of transmitting data by, for example, a universal serial bus (USB) or the like.

The communication device 913 is, for example, a communication interface configured by using a communication device or the like for connection to a network 920. The communication device 913 is, for example, a communication card for wired or wireless local area network (LAN), long term evolution (LTE), Bluetooth (registered trademark), wireless USB (WUSB), or the like. Further, the communication device 913 may be a router for optical communication, a router for asymmetric digital subscriber line (ADSL), a modem for various types of communication, or the like. The communication device 913 can transmit and receive a signal and the like to and from, for example, the Internet and another communication device in accordance with a predetermined protocol such as TCP/IP. The communication device 913 can implement the communication unit 220 of the reproduction device 200 (or the communication unit 120 of the distribution device 100).

Note that the network 920 is a wired or wireless transmission path of information transmitted from a device connected to the network 920. For example, the network 920 may include a public line network such as the Internet, a telephone line network, or a satellite communication network, various local area networks (LAN) including Ethernet (registered trademark), a wide area network (WAN), and the like. In addition, the network 920 may include a dedicated line network such as an Internet protocol-virtual private network (IP-VPN).

The hardware configuration example capable of implementing the functions of the information processing device 900 according to the present embodiment has been described above. Each component described above may be implemented by using a general-purpose member, or may be implemented by hardware specialized for the function of each component. Therefore, it is possible to appropriately change the hardware configuration to be used according to the technical level at the time of implementing the present embodiment.

Note that it is possible to create a computer program for implementing each function of the information processing device 900 according to the present embodiment as described above and install the computer program in a PC or the like. Further, it is possible to provide a computer-readable recording medium in which such a computer program is stored. Examples of the recording medium include a magnetic disk, an optical disk, a magneto-optical disk, a flash memory, and the like. Further, the computer program described above may be distributed via, for example, a network without using the recording medium.

### <6. Conclusion>

As described above, the information processing device according to the present disclosure generates a haptic signal used for providing haptic stimulation corresponding to a content to a user based on a reproduction speed of the content provided to the user. Specifically, the information processing device according to the present disclosure changes the haptic signal based on a change of the reproduction speed of the content. For example, the information processing device according to the present disclosure changes the haptic signal so as to change a reproduction period of the haptic signal based on the change of the reproduction speed of the content.

As a result, the information processing device according to the present disclosure can more appropriately provide the haptic stimulation based on the reproduction speed of the content. Since the senses of a human are relatively insensitive to the frequency change of the haptic stimulation, the information processing device according to the present disclosure can provide, to the user, the haptic stimulation that does not make the user feel uncomfortable even in a case where the haptic signal is changed so as to change the reproduction period of the haptic signal. At this time, the information processing device according to the present disclosure can change the haptic signal in various modes such as changing the haptic signal so as to change the frequency or changing the haptic signal so as to maintain the frequency.

As described above, the preferred embodiments of the present disclosure have been described in detail with reference to the accompanying drawings, but the technical scope of the present disclosure is not limited to such examples. It will be apparent to those skilled in the art to which the present disclosure pertains that various modifications or alterations can be conceived within the scope of the technical idea described in the claims and it is naturally understood that these modifications or alterations fall within the technical scope of the present disclosure.

Furthermore, the effects described in the present specification are merely illustrative or exemplary and are not restrictive. That is, the technology according to the present disclosure can exhibit, in addition to or in place of the above-described effects, other effects obvious to those skilled in the art from the description of the present specification.

Note that the following configurations also fall within the technical scope of the present disclosure.
(1) An information processing device comprising:
   a haptic control unit that generates a signal used for providing haptic stimulation corresponding to a content to a user based on a reproduction speed of the content provided to the user.
(2) The information processing device according to the above (1), wherein
   the haptic control unit changes the signal based on a change of the reproduction speed.
(3) The information processing device according to the above (2), wherein
   the haptic control unit changes the signal so as to change a reproduction period of the signal based on the change of the reproduction speed.
(4) The information processing device according to the above (3), wherein
   the haptic control unit extends or compresses the signal so as to change a frequency of the signal based on the change of the reproduction speed.
(5) The information processing device according to the above (3), wherein
   the haptic control unit changes the signal so as to maintain a frequency of the signal based on the change of the reproduction speed.
(6) The information processing device according to the above (5), wherein
   the haptic control unit changes the signal so as to maintain the frequency of the signal based on a change rate of the reproduction speed in a case where the change rate is higher than a predetermined value.
(7) The information processing device according to the above (4), wherein
   the haptic control unit changes the signal based on a characteristic of a haptic output unit that outputs the haptic stimulation.
(8) The information processing device according to the above (7), wherein
   the haptic control unit changes an amplitude of the signal so as to maintain an output intensity of the haptic stimulation before and after the change of the reproduction speed.
(9) The information processing device according to the above (8), wherein
   the haptic control unit limits a change rate of the frequency before and after the change of the reproduction speed in a case where the output intensity of the haptic stimulation after the change of the reproduction speed becomes lower than a predetermined value.
(10) The information processing device according to any one of the above (1) to (9), wherein
   the reproduction speed is determined based on an input made by the user.
(11) The information processing device according to any one of the above (1) to (10), wherein
   the haptic stimulation includes at least one of vibration stimulation, electrical stimulation, stimulation caused by a temperature change, stimulation related to a sense-of-force, or stimulation related to a cutaneous sensation.
(12) An information processing method executed by a computer, the information processing method comprising:
   generating a signal used for providing haptic stimulation corresponding to a content to a user based on a reproduction speed of the content provided to the user.
(13) A program for causing a computer to execute:
   generating a signal used for providing haptic stimulation corresponding to a content to a user based on a reproduction speed of the content provided to the user.
(14) An information processing device comprising:
   a communication unit that receives a signal generated based on a reproduction speed of a content provided to a user and used for providing haptic stimulation corresponding to the content to the user; and
   a haptic output unit that outputs the haptic stimulation by using the signal.

### Reference Signs List

- 100: DISTRIBUTION DEVICE

- 110: CONTROL UNIT
- 111: VIDEO CONTROL UNIT
- 112: SOUND CONTROL UNIT
- 113: HAPTIC CONTROL UNIT
- 120: COMMUNICATION UNIT
- 130: STORAGE UNIT
- 200: REPRODUCTION DEVICE
- 210: CONTROL UNIT
- 211: SPEED DETERMINATION UNIT
- 212: VIDEO CONTROL UNIT
- 213: SOUND CONTROL UNIT
- 214: HAPTIC CONTROL UNIT
- 220: COMMUNICATION UNIT
- 230: INPUT UNIT
- 240: OUTPUT UNIT
- 241: VIDEO OUTPUT UNIT
- 242: SOUND OUTPUT UNIT
- 243: HAPTIC OUTPUT UNIT
- 250: STORAGE UNIT

## Claims

1. An information processing device comprising:
a haptic control unit that generates a signal used for providing haptic stimulation corresponding to a content to a user based on a reproduction speed of the content provided to the user.

2. The information processing device according to claim 1, wherein
the haptic control unit changes the signal based on a change of the reproduction speed.

3. The information processing device according to claim 2, wherein
the haptic control unit changes the signal so as to change a reproduction period of the signal based on the change of the reproduction speed.

4. The information processing device according to claim 3, wherein
the haptic control unit extends or compresses the signal so as to change a frequency of the signal based on the change of the reproduction speed.

5. The information processing device according to claim 3, wherein
the haptic control unit changes the signal so as to maintain a frequency of the signal based on the change of the reproduction speed.

6. The information processing device according to claim 5, wherein
the haptic control unit changes the signal so as to maintain the frequency of the signal based on a change rate of the reproduction speed in a case where the change rate is higher than a predetermined value.

7. The information processing device according to claim 4, wherein
the haptic control unit changes the signal based on a characteristic of a haptic output unit that outputs the haptic stimulation.

8. The information processing device according to claim 7, wherein
the haptic control unit changes an amplitude of the signal so as to maintain an output intensity of the haptic stimulation before and after the change of the reproduction speed.

9. The information processing device according to claim 8, wherein
the haptic control unit limits a change rate of the frequency before and after the change of the reproduction speed in a case where the output intensity of the haptic stimulation after the change of the reproduction speed becomes lower than a predetermined value.

10. The information processing device according to claim 1, wherein
the reproduction speed is determined based on an input made by the user.

11. The information processing device according to claim 1, wherein
the haptic stimulation includes at least one of vibration stimulation, electrical stimulation, stimulation caused by a temperature change, stimulation related to a sense-of-force, or stimulation related to a cutaneous sensation.

12. An information processing method executed by a computer, the information processing method comprising:
generating a signal used for providing haptic stimulation corresponding to a content to a user based on a reproduction speed of the content provided to the user.

13. A program for causing a computer to execute:
generating a signal used for providing haptic stimulation corresponding to a content to a user based on a reproduction speed of the content provided to the user.

14. An information processing device comprising:
a communication unit that receives a signal generated based on a reproduction speed of a content provided to a user and used for providing haptic stimulation corresponding to the content to the user; and
a haptic output unit that outputs the haptic stimulation by using the signal.
